# EUROPÄISCHE PATENTANMELDUNG

(11) **EP 3 502 162 A1**
(43) Veröffentlichungstag der Anmeldung: **26.06.2019**
(21) Anmeldenummer: 17208405.5
(22) Anmeldetag: 19.12.2017
(51) Int. Cl.: C08G 63/664, C08G 65/26

(54) **VERFAHREN ZUR HERSTELLUNG VON POLYETHERESTERPOLYOLEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der Erfindung ist ein Verfahren zur Herstellung eines Polyetheresterpolyols durch Anlagerung von Alkylenoxid und Lacton an H-funktionelle Startersubstanz in Gegenwart eines Doppelmetallcyanid-Katalysators, wobei zunächst ein Suspensionsmittel, das keine H-funktionellen Gruppen enthält, in einem Reaktor vorgelegt wird und anschließend eine H-funktionelle Startersubstanz während der Reaktion kontinuierlich in den Reaktor zudosiert wird. Ein weiterer Gegenstand ist auch das Polyetheresterpolyol und erhältlich nach dem erfindungsgemäßen Verfahren sowie daraus herstellbare Polyurethane.

## Beschreibung

Gegenstand der Erfindung ist ein Verfahren zur Herstellung eines Polyetheresterpolyols durch Anlagerung von Alkylenoxid und Lacton an H-funktionelle Startersubstanz in Gegenwart eines Doppelmetallcyanid-Katalysators, wobei zunächst ein Suspensionsmittel, das keine H-funktionellen Gruppen enthält, in einem Reaktor vorgelegt wird und anschließend eine H-funktionelle Startersubstanz während der Reaktion kontinuierlich in den Reaktor zudosiert wird. Ein weiterer Gegenstand ist auch das Polyetheresterpolyol und erhältlich nach dem erfindungsgemäßen Verfahren sowie daraus herstellbare Polyurethane.

WO2012022048 offenbart ein Verfahren zur Herstellung von Polyetheresterpolyolen durch Umsetzung einer H-funktionellen Startersubstanz mit Alkylenoxiden und Lactonen in Gegenwart von hybriden Katalysatorsystemen mit einem Lactonanteil von 20 Gew.-%, wobei diese Systeme aus einem Doppelmetallcyanidkatalysator (DMC - Katalysator) und einem weiteren Co-Katalysator, wie beispielsweise Titanalkoholat bestehen. Die Verwendung von reinen Doppelmetallcyanid-Katalysatoren führt nach Auffassung der Autoren zu trüben oder geschichteten Polyolprodukten, was auf Inhomogenitäten der Polyolzusammensetzungen zurückzuführen ist. Letztere Inhomogenitäten führen nach Umsetzung der Polyolkomponente mit Polyisocyanaten in dem resultierenden Polyurethan-Elastomer zu einem schlechteren Quellungsverhalten für Polyetheresterpolyole hergestellt mit Doppelmetallcyanidkatalysatoren ohne Co-Katalysator im Vergleich zu solchen mit Co-Katalysator.

US 5,032,671 offenbart ein Verfahren zur Herstellung von Polyetheresterpolyolen durch Umsetzung einer H-funktionellen Startersubstanz mit Alkylenoxiden und Lactonen in Gegenwart eines Doppelmetallcyanidkatalysators. Hierbei werden oligomere, H-funktionelle Startersubstanzen zusammen mit dem DMC - Katalysator im Reaktor vorgelegt und eine Mischung aus Alkylenoxiden und Lactonen im sogenannten semi-batch Modus 20 h zudosiert, wobei Reaktionszeiten von 20 h resultierten und der maximaler theoretischer Estergruppenanteil im resultierenden Copolymer 20 Gew.-% betrug.

Es war daher Aufgabe der vorliegenden Erfindung, ein einfaches und zeiteffizientes Verfahren zur Herstellung von Polyetheresterpolyolen bereitzustellen. Hierbei sollen möglichst auch kommerziell-erhältliche Katalysatoren im Bereich der Polyolsynthsese verwendet werden um homogene, einphasige Polyol-Produktzusammensetzungen zu erhalten, und Inhomogenitäten, wie Trübungen oder gar Entmischungsprozesse zu vermeiden, welche die Weiterverbreitung, wie beispielsweise in der Bildung der Polyurethanen erschwert. Im Speziellen war es auch Gegenstand der vorliegenden Erfindung den Estergruppenanteil im Polyesterpolyol gegenüber den im Stand der Technik bekannten Verfahren zu erhöhen.

Überraschend wurde gefunden, dass die erfindungsgemäße Aufgabe gelöst wird durch ein Verfahren zur Herstellung eines Polyetheresterpolyols durch Anlagerung von Alkylenoxid und Lacton an H-funktionelle Startersubstanz in Gegenwart eines Doppelmetallcyanid-Katalysators, wobei
(α) ein Suspensionsmittel, das keine H-funktionellen Gruppen enthält, in einem Reaktor vorgelegt wird und
(γ) H-funktionelle Startersubstanz während der Reaktion kontinuierlich in den Reaktor zudosiert wird.

Bei dem erfindungsgemäßen Verfahren wird zunächst ein Suspensionsmittel, das keine H-funktionellen Gruppen enthält, im Reaktor vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

### Zu Schritt (α):

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 2000 ppm beträgt

In einer bevorzugten Ausführungsform wird in das resultierende Gemisch aus Suspensionsmittel und DMC-Katalysator bei einer Temperatur von 90 bis 150°C, besonders bevorzugt von 100 bis 140°C Inertgas (beispielsweise Argon oder Stickstoff), ein Inertgas eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff) beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)
(a-I) das Suspensionsmittel oder ein Gemisch aus mindestens zwei Suspensionsmitteln vorgelegt und
(α-II) die Temperatur des Suspensionsmittels oder des Gemisches aus mindestens zwei Suspensionsmittel auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) durch den Reaktor geleitet wird,
wobei der Doppelmetallcyanid-Katalysator zum Suspensionsmittel oder zum Gemisch aus mindestens zwei Suspensionsmitteln in Schritt (a-I) oder unmittelbar anschließend in Schritt (α-II) zugesetzt werden, und
wobei das Suspensionsmittel keine H-funktionellen Gruppen enthält.

### Zu Schritt (β):

Schritt (β) dient der Aktivierung des DMC-Katalysators. Dieser Schritt kann gegebenenfalls unter Inertgasatmosphäre durchgeführt werden. Als Aktivierung im Sinne dieser Erfindung wird ein Schritt bezeichnet, bei dem eine Teilmenge Alkylenoxidverbindung oder einer Mischung aus Alkylenoxidverbindung und Lacton, bei Temperaturen von 90 bis 150°C zur DMC-KatalysatorSuspension zugegeben wird und dann die Zugabe der Alkylenoxidverbindung oder einer Mischung aus Alkylenoxidverbindung und Lacton unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid oder einer Mischung aus Alkylenoxidverbindung und Lacton ein Druckabfall im Reaktor beobachtet wird. Der Verfahrensschritt der Aktivierung ist die Zeitspanne von der Zugabe der Teilmenge an Alkylenoxidverbindung oder einer Mischung aus Alkylenoxidverbindung und Lacton zum DMC-Katalysator bis zum Auftreten der Wärmeentwicklung. Gegebenenfalls kann die Teilmenge an Alkylenoxidverbindung oder einer Mischung aus Alkylenoxidverbindung und Lacton in mehreren Einzelschritten zum DMC-Katalysator gegeben werden und dann jeweils die Zugabe der Alkylenoxidverbindung oder einer Mischung aus Alkylenoxidverbindung und Lacton unterbrochen werden. Im diesem Fall umfasst der Verfahrensschritt der Aktivierung die Zeitspanne von der Zugabe der ersten Teilmenge an Alkylenoxidverbindung oder einer Mischung aus Alkylenoxidverbindung und Lacton zum DMC-Katalysator bis zum Auftreten der Wärmeentwicklung nach Zugabe der letzten Teilmenge an Alkylenoxidverbindung oder einer Mischung aus Alkylenoxidverbindung und Lacton. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide oder einer Mischung aus Alkylenoxidverbindung und Lacton kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon), wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden oder einer Mischung aus Alkylenoxidverbindung und Lacton 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid oder einer Mischung aus Alkylenoxidverbindung und Lacton kann in einem Schritt oder portionsweise in mehreren Teilmengen zugegeben werden. Bevorzugt wird nach Zugabe einer Teilmenge Alkylenoxidverbindung oder einer Mischung aus Alkylenoxidverbindung und Lacton die Zugabe der Alkylenoxidverbindung oder einer Mischung aus Alkylenoxidverbindung und Lacton bis zum Auftreten der Wärmeentwicklung unterbrochen und erst dann die nächste Teilmenge an Alkylenoxidverbindung oder einer Mischung aus Alkylenoxidverbindung und Lacton zugegeben.

### Zu Schritt (γ):

Die Dosierung einer oder mehrerer H-funktioneller Startersubstanz(en), einer Mischung aus Alkylenoxidverbindung und Lacton kann simultan oder sequentiell (portionsweise) erfolgen, beispielsweise kann die Menge an H-funktionellen Startersubstanzen und/oder die in Schritt (γ) dosierte Menge einer Mischung aus Alkylenoxidverbindung und Lacton auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, die Mischung aus Alkylenoxidverbindung und Lacton mit konstanter Dosierrate zu dosieren oder die Dosierrate allmählich oder schrittweise zu steigern oder zu senken oder die Mischung aus Alkylenoxidverbindung und Lacton und/oder weiterer Alkylenoxidverbindung und/oder Lacton portionsweise zuzugeben. Bevorzugt wird das Alkylenoxid oder einer Mischung aus Alkylenoxidverbindung und Lacton mit konstanter Dosierrate dem Reaktionsgemisch zugegeben. Werden mehrere Alkylenoxide und/oder Lactone zur Synthese der Polyetheresterpolyole eingesetzt, so können die Alkylenoxide und/oder Lactone einzeln oder als Gemisch dosiert werden. Die Dosierung der Alkylenoxidverbindung, des Lactons bzw. der H-funktionellen Startersubstanzen kann simultan oder sequentiell über jeweils separate Dosierungen (Zugaben) erfolgen oder über eine oder mehrere Dosierungen, wobei die Alkylenoxide, Lactone bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Lactons ist es möglich, statistische, alternierende, blockartige oder gradientenartige Polyetheresterpolyole zu synthetisieren.

In einer bevorzugten Ausführungsform wird in Schritt (γ) die Dosierung der einen oder mehreren H-funktionellen Startersubstanz(en) zeitlich vor der Zugabe des Alkylenoxids beendet.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyetheresterpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyetheresterpolyol können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren Startersubstanz(en) und einem oder mehreren Lacton(en) umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und einem oder mehreren Lacton(en) umgesetzt.

Bei Reaktionsführung in einem Rohrreaktor werden die gemäß den Schritten (α) und (β) resultierende aktivierte Katalysator-Suspensionsmittel-Mischung, eine oder mehrere H-funktionelle Startersubstanz(en), ein oder mehrere Alkylenoxid(e) und einem oder mehreren Lacton(en) umgesetzt kontinuierlich durch ein Rohr gepumpt. Die molaren Verhältnisse der Reaktionspartner variieren je nach gewünschtem Polymer. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyetheresterpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyetheresterpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.
Gegenstand der Erfindung ist daher auch ein Verfahren wobei in Schritt (γ) eine oder mehrere H-funktionelle Startersubstanz(en), ein oder mehrere Alkylenoxid(e), ein oder mehrere Lacton(e) umgesetzt sowie DMC-Katalysator ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyetheresterpolyole gemäß den Schritten (α) und (β) eine aktivierte DMC-Katalysator-Suspensionsmittel-Mischung hergestellt, dann werden gemäß Schritt (γ)
(γ1) jeweils eine Teilmenge an einer oder mehreren H-funktionelle Startersubstanz(en), einem oder mehreren Alkylenoxid(en) und einem oder mehreren Lacton(en) umgesetzt zudosiert zum Initiieren der Copolymerisation, und
(γ2) während des Fortschreitens der Copolymerisation jeweils die verbleibende Menge an DMC-Katalysator, einer oder mehreren Startersubstanz(en) und Alkylenoxid(en) und einem oder mehreren Lacton(en) kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 2000 ppm beträgt.

Vorzugsweise werden die Schritte (α) und (β) in einem ersten Reaktor durchgeführt, und das resultierende Reaktionsgemisch dann in einen zweiten Reaktor für die Copolymersation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyetheresterpolyolprodukts verwendet werden kann, wobei anfänglich ein gemäß den Schritten (α) und (ß) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer Startersubstanz oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyetheresterpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

### Schritt (δ)

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid und/oder Lacton enthält, in einen Nachreaktor überführt werden, in dem im Wege einer Nachreaktion der Gehalt an freiem Alkylenoxid auf weniger als 0,05 Gew.-% im Reaktionsgemisch reduziert wird.

Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyetheresterpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3 -Glycidyloxypropyl-methyl-dimethoxysilan, 3 -Glycidyloxypropyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 250 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl).

Die H-funktionellen Startersubstanzen können auch aus der Substanzklasse der Polyetherpolyole ausgewählt sein, die ein Molekulargewicht Mₙ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyetheresterpolyole dienen können.

In einer weiteren Ausführungsform der Erfindung können Polyethercarbonatpolyole als H-funktionelle Startersubstanzen eingesetzt werden. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.
Des Weiteren können als H-funktionelle Starterverbindungen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-

Typen der Covestro AG verwendet werden, wie z.B. Desmophen® C 1100 oder Desmophen® C 2200.
In einer weiteren Ausführungsform der Erfindung können Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole als H-funktionelle Starterverbindungen eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

In einer Ausführungsform des Verfahrens ist das Lacton mindestens ein 4-gliedriges Ringlacton 5-gliedriges Ringlacton, 6-gliedrigen Ringlacton, 7-gliedriges Ringlacton und/oder höhergliedrige Ringlacton.

In einer Ausführungsform des Verfahrens wird das Lacton ausgewählt aus mindestens einer Verbindung der Gruppe bestehend aus 4-gliedrigen Ringlactone wie Propiolacton, ß-Butyrolacton, ß-Isovalerolacton, ß-Caprolacton, ß-Isocaprolacton, ß-Methyl-ß-valerolacton, 5-gliedrigen Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrigen Ringlactone, wie 8-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactonen, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

In einer bevorzugten Ausführungsform des Verfahrens ist das Lacton mindestens ein 4-gliedriges Ringlacton

In einer besonders bevorzugten Ausführungsform des Verfahrens ist das 4-gliedrige Ringlacton eine oder mehrere Verbindung(en) ausgewählt aus der Gruppe bestehend aus Propiolacton, ß-Butyrolacton, ß-Isovalerolacton, ß-Caprolacton, ß-Isocaprolacton, ß-Methyl-ß-valerolacton, Diketen bevorzugt Propiolacton und ß-Butyrolacton..

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man
(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

M(X)ₙ (II)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (III),

Mᵣ(X)₃ (III)

wobei
M ausgewählt ist aus den Metallkationen Fe³⁺, Al³⁺, Co³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (IV),

M(X)ₛ (IV)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (V),

M(X)ₜ (V)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

(Y)ₐ M'(CN)_{b} (A)_{c} (VI)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺)und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VII)

Mₓ[M'ₓ,(CN)_{y}]_{z} (VII)

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyetheresterpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyetheresterpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyetheresterpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyetheresterpolyole gewisse Stoffeigenschaften wie beispielsweise Molekulargewicht, Viskosität, Funktionalität und/oder Hydroxylzahl erfüllen müssen.

Das Polyisocyanat kann ein aliphatisches oder aromatisches Di- oder Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.
Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

In einer ersten Ausführungsform betrifft die Erfindung ein Verfahren zur Herstellung eines Polyetheresterpolyols durch Anlagerung von Alkylenoxid und Lacton an H-funktionelle Startersubstanz in Gegenwart eines Doppelmetallcyanid-Katalysators, dadurch gekennzeichnet, dass
(a) ein Suspensionsmittel, das keine H-funktionellen Gruppen enthält, in einem Reaktor vorgelegt wird und
(γ) H-funktionelle Startersubstanz während der Reaktion kontinuierlich in den Reaktor zudosiert wird.

In einer zweiten Ausführungsform betrifft die Erfindung ein Verfahren gemäß der ersten Ausführungsform, wobei in Schritt (α) ein Suspensionsmittel, das keine H-funktionellen Gruppen enthält, im Reaktor vorgelegt wird, und dabei keine H-funktionelle Startersubstanz im Reaktor vorgelegt wird.

In einer dritten Ausführungsform betrifft die Erfindung ein Verfahren gemäß der ersten Ausführungsform, wobei in Schritt (α) ein Suspensionsmittel, das keine H-funktionellen Gruppen enthält, und zusätzlich eine Teilmenge der H-funktionellen Startersubstanz im Reaktor vorgelegt wird.

In einer vierten Ausführungsform betrifft die Erfindung ein Verfahren gemäß einer der ersten bis dritten Ausführungsform, wobei in Schritt (α) ein Suspensionsmittel, das keine H-funktionellen Gruppen enthält, gemeinsam mit DMC-Katalysator im Reaktor vorgelegt wird.

In einer fünften Ausführungsform betrifft die Erfindung ein Verfahren gemäß der vierten Ausführungsform, wobei anschließend an Schritt (α)
(β) zu dem Gemisch aus Schritt (α) eine Teilmenge an Alkylenoxid oder einer Mischung aus Alkylenoxid und Lacton bei Temperaturen von 90 bis 150°C zugegeben wird, und wobei dann die Zugabe der Alkylenoxidverbindung unterbrochen wird.

In einer sechsten Ausführungsform betrifft die Erfindung ein Verfahren gemäß der Ausführungsform, wobei in Schritt (β) eine Mischung aus Alkylenoxid und Lacton zugegeben wird und der Anteil des Lactons 1 Gew.-% bis 80 Gew.-% bevorzugt 3 Gew.-% bis 60 Gew.-%und besonders bevorzugt 22 Gew.-% bis 40 Gew.-% bezogen auf die Gesamtmasse aus zudosierten Alkylenoxid und Lacton in Schritt (β) beträgt.

In einer siebten Ausführungsform betrifft die Erfindung ein Verfahren gemäß einer der ersten bis sechsten Ausführungsform, wobei in Schritt (γ) H-funktionelle Startersubstanz, Alkylenoxid und Lacton kontinuierlich dosiert werden ("Copolymerisation").

In einer achten Ausführungsform betrifft die Erfindung ein Verfahren gemäß einer der ersten bis sechsten Ausführungsform, wobei in Schritt (γ) die Dosierung der H-funktionellen Startersubstanz zeitlich vor der Zugabe des Alkylenoxids beendet wird.

In einer neunten Ausführungsform betrifft die Erfindung ein Verfahren gemäß der achten Ausführungsform, wobei in Schritt (γ) eine Mischung aus Alkylenoxid und Lacton zugegeben wird und der Anteil des Lactons 1 Gew.-% bis 80 Gew.-% bevorzugt 3 Gew.-% bis 60 Gew.-%und besonders bevorzugt22 Gew.-% bis 40 Gew.-% bezogen auf die Gesamtmasse aus zudosierten Alkylenoxid und Lacton in Schritt (γ) beträgt.

In einer zehnten Ausführungsform betrifft die Erfindung ein Verfahren gemäß einem der ersten bis neunten Ausführungsform, wobei das Lacton mindestens ein 4-gliedriges Ringlacton 5-gliedriges Ringlacton, 6-gliedrigen Ringlacton, 7-gliedriges Ringlacton und/oder höhergliedrige Ringlacton ist.

In einer elften Ausführungsform betrifft die Erfindung ein Verfahren gemäß der zehnten Ausführungsform, wobei das Lacton ein 4-gliedriges Ringlacton ist.

In einer zwölften Ausführungsform betrifft die Erfindung ein Verfahren gemäß der elften Ausführungsform, wobei das 4-gliedrige Ringlacton eine oder mehrere Verbindung(en) ist und ausgewählt wird aus der Gruppe bestehend aus Propiolacton, ß-Butyrolacton, ß-Isovalerolacton, ß-Caprolacton, ß-Isocaprolacton, ß-Methyl-ß-valerolacton, Diketen bevorzugt Propiolacton und ß-Butyrolacton.

In einer dreizehnten Ausführungsform betrifft die Erfindung ein Verfahren gemäß einer der achten bis zwölften Ausführungsform, wobei in Schritt (γ) DMC-Katalysator kontinuierlich in den Reaktor dosiert wird und das resultierende Reaktionsgemisch kontinuierlich aus dem Reaktor entfernt wird.

In einer vierzehnten Ausführungsform betrifft die Erfindung ein Verfahren gemäß der achten Ausführungsform, wobei der DMC-Katalysator in H-funktioneller Startersubstanz suspendiert kontinuierlich zugegeben wird.

In einer fünfzehnten Ausführungsform betrifft die Erfindung ein Verfahren gemäß der dreizehnten oder vierzehnten Ausführungsform, wobei
(δ) das in Schritt (γ) kontinuierlich entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

In einer sechzehnten Ausführungsform betrifft die Erfindung ein Verfahren gemäß einem der ersten bis fünfzehnten Ausführungsform, wobei in Schritt (α) als Suspensionsmittel eine Verbindung oder mehrere Verbindung(en) ist und ausgewählt wird aus der Gruppe bestehend aus 4-Methyl-2-oxo-1,3-dioxolan, 1,3-Dioxolan-2-on, Aceton, Methylethylketon, Acetonitril, Nitromethan, Dimethyl-sulf¬oxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetra¬chlor¬kohlenstoff eingesetzt wird.

In einer siebzehnten Ausführungsform betrifft die Erfindung ein Verfahren der sechzehnten Ausführungsform, wobei das Suspensionsmittel eine Verbindung oder mehrere Verbindung(en) ist und ausgewählt wird aus der Gruppe bestehend aus 4-Methyl-2-oxo-1,3-dioxolan und 1,3-Dioxolan-2-on oder eine Mischung aus 4-Methyl-2-oxo-1,3-dioxolan und 1,3-Dioxolan-2-on eingesetzt wird.

In einer achtzehnten Ausführungsform betrifft die Erfindung ein Verfahren gemäß einem der ersten bis siebzehnten Ausführungsform, wobei die H-funktionelle Startersubstanz Suspensionsmittel eine Verbindung oder mehrere Verbindung(en) ist und ausgewählt wird aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

In einer neunzehnten Ausführungsform betrifft die Erfindung ein Verfahren gemäß der achtzehnten Ausführungsform, wobei die H-funktionelle Startersubstanz Suspensionsmittel eine Verbindung oder mehrere Verbindung(en) ist und ausgewählt wird aus der Gruppe bestehend aus Ethylenglykol Propylenglykol Trimethylolpropan und Glycerin.

In einer zwanzigsten Ausführungsform betrifft die Erfindung ein Verfahren gemäß einem der ersten bis siebzehnten Ausführungsform, wobei der DMC-Katalysator in einer Menge eingesetzt wird, so dass der Gehalt an DMC-Katalysator im resultierenden Reaktionsprodukt 10 bis 10000 ppm, besonders bevorzugt 20 bis 5000 ppm und höchst bevorzugt 50 bis 2000 ppm beträgt

In einer einundzwanzigsten Ausführungsform betrifft die Erfindung ein Polyetheresterpolyol erhältlich nach mindestens einem der ersten bis zwanzigsten Ausführungsform.

In einer zweiundzwanzigsten Ausführungsform betrifft die Erfindung ein Verfahren zur Herstellung von Polyurethanen erhältlich durch Umsetzung von
i) Polyetheresterpolyolen gemäß einem der einundzwanzigsten Ausführungsform mit
ii) Polyisocyanaten

In einer dreiundzwanzigsten Ausführungsform betrifft die Erfindung ein Verfahren zur Herstellung von Polyurethanen gemäß der zweiundzwanzigsten Ausführungsform, wobei das Polyisocyanat eine oder mehrere Verbindung(en) ist und ausgewählt wird aus der Gruppe bestehend aus 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

In einer vierundzwanzigsten Ausführungsform betrifft die Erfindung ein Verfahren zur Herstellung von Polyurethanen gemäß der dreiundzwanzigsten Ausführungsform, wobei das Polyisocyanat eine oder mehrere Verbindung(en) ist und ausgewählt wird aus der Gruppe bestehend aus 2,4-Toluylendiisocyanat, 2,6-Toluylendiisocyanat (TDI), 2,2'- Diphenylmethandiisocyanat 2,4'-Diphenylmethandiisocyanat 4,4'-Diphenylmethandiisocyanat (MDI).

### Beispiele

### Verwendete Ausgangsstoffe

Propylenglykol (Reinheit > 99,5 %, Sigma-Aldrich Chemie GmbH)
Propylenoxid (Reinheit > 99,5 %, Sigma-Aldrich Chemie GmbH)
β-Propiolacton (97 %, Acros Organics BVBA)
β-Butyrolacton (Reinheit 98 %, Sigma-Aldrich Chemie GmbH)
γ-Butyrolacton (> 99 %, Sigma-Aldrich Chemie GmbH)
ε-Caprolacton (Reinheit 97 %, Sigma-Aldrich Chemie GmbH)
Als DMC-Katalysator wurde bei allen Beispielen DMC-Katalysator hergestellt gemäß Beispiel 6 in WO 01/80994 A1 eingesetzt.

### Beschreibung der Methoden:

Gel-Permeations-Chromatographie (GPC): Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 x PSS SDV Vorsäule 100 Å (5 µm), 2× PSS SDV 1000 Å (5 µm). Zur Kalibrierung wurde das ReadyCal-Kit Poly(styrene) low im Bereich Mp = 266 - 66000 Da von "PSS Polymer Standards Service" verwendet. Als Messaufnahme- und Auswertungssoftware wurde das Programmpaket "PSS WinGPC Unity" verwendet.

### Beispiel 1: Herstellung von Polyetheresterpolyol mit Vorlage von cPC als Suspensionsmittel und kontinuierlicher Dosierung von Propylenglykol als H-funktioneller Startersubstanz und β-Propiolacton als Lacton

### Schritt α:

100 mg getrockneter DMC-Katalysator, der nicht aktiviert ist, wurde in 50,0 g 4-Methyl-2-oxo-1,3-dioxolan (im Folgenden auch als cyclisches Propylencarbonat oder cPC bezeichnet) in einem 0,3 L Druckreaktor mit Gasdosierungseinrichtung suspendiert. Der Reaktor wurde verschlossen und durch dreimaliges Beaufschlagen mit 20 bar N2 und anschließendes Entspannen auf 5 bar inertisiert.

### Schritt β:

In dem Reaktor wurden bei 130 °C, 500 U/min und bei einem Vordruck von 5 bar, der mit Stickstoff eingestellt wurde, eine Menge von 10 g einer Mischung aus β-Propiolacton (10 Gew.-%) in Propylenoxid auf einmal zugegeben. Das Anspringen der Reaktion machte sich durch eine Temperaturspitze ("Hotspot") und durch einen Druckabfall auf den Ausgangsdruck bemerkbar. Der Vorgang wurde insgesamt zweimal durchgeführt.

### Schritt γ:

Nach der erfolgten Aktivierung wurden 76,20 g einer Mischung aus β-Propiolacton (30 Gew.-%) in Propylenoxid mit 1 g/min und gleichzeitig 38,05 g einer Mischung aus Propylenglykol (10 Gew.-%) in Propylencarbonat mit 1 g/min simultan in den Reaktor eindosiert. Nach beendeter Zugabe wird bis zum Abklingen der exothermen Reaktion und bis zur Druckkonstanz bei 130 °C gerührt. Das mittlere Molekulargewicht (bestimmt mittels Gelpermeationschromatographie) sind in der Tabelle 1 angegeben.

### Beispiel 2: Herstellung von Polyetheresterpolyol mit Vorlage von cPC als Suspensionsmittel und kontinuierlicher Dosierung von Propylenglycol als H-funktioneller Startersubstanz und β-Butyrolacton als Lacton

Entsprechend des Beispiels 1 wurde die Herstellung des Polyetheresterpolyols durchgeführt, wobei in Schritt β und γ ein Gemisch aus β-Butyrolacton (30 Gew.-%) in Propylenoxid eingesetzt wurde. Die Ergebnisse sind in Tabelle 1 angegeben.

### Beispiel 3: Herstellung von Polyetheresterpolyol mit Vorlage von cPC als Suspensionsmittel und kontinuierlicher Dosierung von Propylenglycol als H-funktioneller Startersubstanz und ε-Caprolacton als Lacton

Entsprechend des Beispiels 1 wurde die Herstellung des Polyetheresterpolyols durchgeführt, wobei in Schritt β und γ ein Gemisch aus ε-Caprolacton (30 Gew.-%) in Propylenoxid eingesetzt wurde.

**Die Ergebnisse sind in Tabelle 1 angegeben.**

### Beispiel 4: Herstellung von Polyetheresterpolyol mit Vorlage von cPC als Suspensionsmittel und kontinuierlicher Dosierung von Propylenglycol als H-funktioneller Startersubstanz und β-Propiolacton als Lacton

Entsprechend des Beispiels 1 wurde die Herstellung des Polyetheresterpolyols durchgeführt, wobei in Schritt β und γ ein Gemisch aus β-Propiolacton (5 Gew.-%) in Propylenoxid eingesetzt wurde. Die Ergebnisse sind in Tabelle 1 angegeben.

### Beispiel 5: Herstellung von Polyetheresterpolyol mit Vorlage von cPC als Suspensionsmittel und kontinuierlicher Dosierung von Propylenglycol als H-funktioneller Startersubstanz und β-Propiolacton als Lacton

Entsprechend des Beispiels 1 wurde die Herstellung des Polyetheresterpolyols durchgeführt, wobei in Schritt β und γ ein Gemisch aus β-Propiolacton (10 Gew.-%) in Propylenoxid eingesetzt wurde. Die Ergebnisse sind in Tabelle 1 angegeben.

### Beispiel 6 (Vergleich): Herstellung von Polyetheresterpolyol mit Vorlage des Propylenglycols als H-funktioneller Startersubstanz und β-Propiolacton als Lacton

### Schritt α:

100 mg getrockneter DMC-Katalysator, der nicht aktiviert ist, wurde in 50 g 4-Methyl-2-oxo-1,3-dioxolan (im Folgenden auch als cyclisches Propylencarbonat oder cPC bezeichnet) und 3,805 g Monopropylenglykol (MPG) in einem 0,3 L Druckreaktor mit Gasdosierungseinrichtung suspendiert. Der Reaktor wurde verschlossen und durch dreimaliges Beaufschlagen mit 20 bar N₂ und anschließendes Entspannen auf 5 bar inertisiert.

### Schritt β:

In dem Reaktor wurden bei 130 °C, 500 U/min und bei einem Vordruck von 5 bar, der mit Stickstoff eingestellt wurde, eine Menge von 10 g einer Mischung aus β-Propiolacton (10 Gew.-%) in Propylenoxid auf einmal zugegeben. Nach der Zugabe des Propylenoxids zeigte sich keine Reaktion, die sich durch eine Temperaturerhöhung und einen Druckabfall im Reaktor bemerkbar gemacht hätte. Auch das Hinzufügen einer zweiten Teilmenge PO (10 g) führte nicht zum Einsetzen einer Reaktion. Das Polyesterether Polyol konnte auf diese Weise nicht hergestellt werden.

**Tabelle 1: Umsatz des Lactons sowie Molekulargewicht der Polyetheresterpolyole**

| Beispiel | Lacton | Lactonanteil in Schritt (β) / (γ) (Gew.-%)^{a)} | X(Lacton) [%] | *Mₙ* [g/mol] |
|---|---|---|---|---|
| 1 | β-Propiolacton | 30/30 | 100 | 1845 |
| 2 | β-Butyrolacton | 30/30 | 82 | 2089 |
| 3 | ε-Caprolacton | 30/30 | 21 | 1975 |
| 4 | β-Propiolacton | 5/5 | 100 | 1945 |
| 5 | β-Propiolacton | 10/10 | 100 | 1856 |
| 6 (Vergleich) | β-Propiolacton | 30/30 | n.b. | n.b. |

| | | | | |
|---|---|---|---|---|
| a) berechneter Lactonanteil dosiert in Schritt (β) / (γ) bezogen auf die Summe von Lacton und Alkylenoxid in Gew.-% in Schritt (β) / (γ). | | | | |

## Patentansprüche

1. Verfahren zur Herstellung eines Polyetheresterpolyols durch Anlagerung von Alkylenoxid und Lacton an H-funktionelle Startersubstanz in Gegenwart eines Doppelmetallcyanid-Katalysators, **dadurch gekennzeichnet, dass**
(α) ein Suspensionsmittel, das keine H-funktionellen Gruppen enthält, in einem Reaktor vorgelegt wird und
(γ) H-funktionelle Startersubstanz während der Reaktion kontinuierlich in den Reaktor zudosiert wird.

2. Verfahren gemäß Anspruch 1, wobei in Schritt (a) ein Suspensionsmittel, das keine H-funktionellen Gruppen enthält, im Reaktor vorgelegt wird, und dabei keine H-funktionelle Startersubstanz im Reaktor vorgelegt wird.

3. Verfahren gemäß Anspruch 1, wobei in Schritt (α) ein Suspensionsmittel, das keine H-funktionellen Gruppen enthält, und zusätzlich eine Teilmenge der H-funktionellen Startersubstanz im Reaktor vorgelegt wird.

4. Verfahren gemäß einem der Ansprüche 1 bis 3, wobei in Schritt (α) ein Suspensionsmittel, das keine H-funktionellen Gruppen enthält, gemeinsam mit DMC-Katalysator im Reaktor vorgelegt wird.

5. Verfahren gemäß Anspruch 4, wobei anschließend an Schritt (α)
(β) zu dem Gemisch aus Schritt (α) eine Teilmenge an Alkylenoxid oder einer Mischung aus Alkylenoxid und Lacton bei Temperaturen von 90 bis 150°C zugegeben wird, und wobei dann die Zugabe der Alkylenoxidverbindung unterbrochen wird.

6. Verfahren gemäß Anspruch 5 , wobei in Schritt (β) eine Mischung aus Alkylenoxid und Lacton zugegeben wird und der Anteil des Lactons 1 Gew.-% bis 80 Gew.-% bevorzugt 3 Gew.-% bis 60 Gew.-%und besonders bevorzugt 22 Gew.-% bis 40 Gew.-% bezogen auf die Gesamtmasse aus zudosierten Alkylenoxid und Lacton in Schritt (β) beträgt.

7. Verfahren gemäß einem der Ansprüche 1 bis 6, wobei in Schritt (γ) H-funktionelle Startersubstanz, Alkylenoxid und Lacton kontinuierlich dosiert werden ("Copolymerisation").

8. Verfahren gemäß einem der Ansprüche 1 bis 7, wobei in Schritt (γ) die Dosierung der H-funktionellen Startersubstanz zeitlich vor der Zugabe des Alkylenoxids beendet wird.

9. Verfahren gemäß Anspruch 8, wobei in Schritt (γ) eine Mischung aus Alkylenoxid und Lacton zugegeben wird und der Anteil des Lactons 1 Gew.-% bis 80 Gew.-% bevorzugt 3 Gew.-% bis 60 Gew.-% und besonders bevorzugt 22 Gew.-% bis 40 Gew.-% bezogen auf die Gesamtmasse aus zudosierten Alkylenoxid und Lacton in Schritt (γ) beträgt.

10. Verfahren gemäß einem der Ansprüche 1 bis 9, wobei das Lacton mindestens ein 4-gliedriges Ringlacton 5-gliedriges Ringlacton, 6-gliedrigen Ringlacton, 7-gliedriges Ringlacton und/oder höhergliedrige Ringlacton ist.

11. Verfahren gemäß Anspruch 10, wobei das Lacton ein 4-gliedriges Ringlacton ist.

12. Verfahren gemäß Anspruch 11, wobei das 4-gliedrige Ringlacton eine oder mehrere Verbindung(en) ist und ausgewählt wird aus der Gruppe bestehend aus Propiolacton, ß-Butyrolacton, ß-Isovalerolacton, ß-Caprolacton, ß-Isocaprolacton, ß-Methyl-ß-valerolacton, Diketen bevorzugt Propiolacton und ß-Butyrolacton.

13. Polyetheresterpolyol erhältlich nach mindestens einem der Ansprüche 1 bis 12.

14. Verfahren zur Herstellung von Polyurethanen erhältlich durch Umsetzung von
i) Polyetheresterpolyols gemäß Anspruch 13 mit
ii) Polyisocyanaten
